# EUROPÄISCHE PATENTANMELDUNG

(11) **EP 2 078 890 A1**
(43) Veröffentlichungstag der Anmeldung: **15.07.2009**
(21) Anmeldenummer: 08000443.5
(22) Anmeldetag: 11.01.2008
(51) Int. Cl.: F16K 31/122

(54) **Ventileinheit**

(71) Anmelder: FESTO AG & Co. KG, 73734 Esslingen (DE)
(72) Erfinder: Schill, Sebastian, 72581 Dettingen/Erms (DE); Larsson, Kristofer, 70184 Stuttgart (DE)
(74) Vertreter: Abel, Martin

(57) **Zusammenfassung**

Es wird eine Ventileinheit (1) vorgeschlagen, die ein Ventilglied (18) mit einem Antriebskolben (22) und einem Verschlusskörper (24) aufweist. Der Verschlusskörper (24) sitzt an einem von dem Antriebskolben (22) wegragenden Steuerschaft (23), der einen Durchlass (15) durchsetzt, welcher zwischen einem Einlass (2) und einem Auslass (3) angeordnet ist. Das über den Einlass (2) zugeführte Fluid beaufschlagt das Ventilglied (18) in Schließrichtung. Gleiches gilt für denjenigen Druck, der am Auslass (3) herrscht.

## Beschreibung

Die Erfindung betrifft eine Ventileinheit, insbesondere zur Steuerung des Blasdruckes bei der Blasherstellung von Kunststoffbehältern, mit einem in einem Ventilgehäuse zwischen einer Offenstellung und einer Schließstellung linear verschiebbar angeordneten Ventilglied, das einen in einer Antriebskammer angeordneten, eine zur Vorgabe der gewünschten Schaltstellung gesteuert mittels eines Antriebsfluides beaufschlagbare Antriebsfläche aufweisenden Antriebskolben enthält, von dem ein eine Wanddurchbrechung der die Antriebskammer begrenzenden Wand unter Abdichtung durchsetzender Steuerschaft wegragt, der in einen einen Einlass mit einem Auslass verbindenden Hauptströmungskanal hineinragt und dort einen Verschlusskörper trägt, der mit einem axial orientierten, gehäusefesten Ventilsitz kooperiert, der einen zwischen dem Einlass und dem Auslass platzierten, bezüglich der Wanddurchbrechung koaxialen Durchlass des Hauptströmungskanals umrahmt.

Eine Ventileinheit dieser Art ist aus der EP 1 281 901 A2 und aus der EP 1 271 029 A1 bekannt. In diesem bekannten Fall enthält das Ventilglied einen einstückig mit einem Antriebskolben verbundenen Steuerschaft, der durch eine Wanddurchbrechung hindurch in einen Hauptströmungskanal hineinragt, der zwischen einem Einlass und einem Auslass verläuft. Der Steuerschaft trägt einen kappenförmigen Verschlusskörper, der einem dem Ventilglied zugeordneten gehäusefesten Ventilsitz gegenüberliegt, welcher einen zwischen dem Einlass und dem Auslass angeordneten Durchlass umrahmt. Das über den Einlass zugeführte Fluid wirkt stirnseitig auf den Verschlusskörper ein und beaufschlagt dadurch das Ventilglied in Öffnungsrichtung. Durch gesteuerte Beaufschlagung einer am Antriebskolben angeordneten Antriebsfläche mittels eines Antriebsfluides kann eine Schließkraft hervorgerufen werden, die das Ventilglied in einer den Durchlass verschließenden Schließstellung hält. Die Querschnitte der Wanddurchbrechung und des Durchlasses sind gleich groß, sodass die zum Schließen des Ventilgliedes und zu dessen Festhalten in der Schließstellung durch das Antriebsfluid aufzubringende Schließkraft ebenfalls gleich groß ist.

Ein Nachteil der bekannten Ventileinheit besteht darin, dass die Öffnungsgeschwindigkeit des Ventilgliedes begrenzt ist. Da der die Antriebsfläche beaufschlagende Druck maximal auf den Atmosphärendruck absenkbar ist, hängt die Umschaltgeschwindigkeit stark vom Arbeitsdruck des über den Einlass eingespeisten Fluides ab. Problematisch ist ferner, dass das Ventilglied selbsttätig in die Offenstellung umschaltet, wenn der die Antriebsfläche beaufschlagende Steuerdruck auf Grund einer Störung wegfällt.

Es ist die Aufgabe der vorliegenden Erfindung, eine Ventileinheit der eingangs genannten Art zu schaffen, die ein schnelles Umschalten in die Offenstellung ermöglicht und dennoch eine hohe Sicherheit gegen Fehlfunktionen aufweist.

Zur Lösung dieser Aufgabe ist vorgesehen, dass der Steuerschaft durch den Durchlass hindurchragt und den Verschlusskörper auf der dem Einlass zugewandten Seite des Durchlasses trägt, wobei der Ventilsitz vom Antriebskolben und dessen Antriebsfläche axial abgewandt ist, derart, dass das in dem zwischen dem Einlass und dem Durchlass angeordneten Einlassabschnitt des Hauptströmungskanals anstehende Fluid ständig in Schließrichtung auf das Ventilglied einwirkt und durch das Antriebsfluid eine entgegengesetzte Öffnungskraft ausübbar ist, und dass der Querschnitt des Durchlasses geringer ist als derjenige, der Wanddurchbrechung, derart, dass das in der Schließstellung in dem zwischen dem Durchlass und dem Auslass angeordneten Auslassabschnitt des Hauptströmungskanals anstehende Fluid eine resultierende Schließkraft auf das Ventilglied ausübt.

Auf diese Weise wird erreicht, dass das Ventilglied unabhängig davon, ob es sich in der Offenstellung oder in der Schließstellung befindet, von dem zu steuernden Fluid in Richtung der Schließstellung beaufschlagt ist. Damit verbunden ist eine hohe Sicherheit bei Fehlfunktionen in der Ansteuerung des Antriebskolbens. Um das Ventilglied in die Offenstellung umzuschalten, muss durch das Antriebsfluid aktiv ein ausreichend hoher Steuerdruck ausgeübt werden. Fällt dieser weg, schaltet das Ventilglied durch den im Einlassabschnitt anstehenden Arbeitsdruck umgehend in die Schließstellung zurück. Es besteht ferner der Vorteil, dass durch Wahl eines entsprechen hohen Steuerdruckes die Umschaltzeit zum Öffnen des Ventilgliedes extrem kurz eingestellt werden kann. Dies ermöglicht vor allem in Verbindung mit der Blasherstellung von Kunststoffbehältern die Einhaltung äußerst kurzer Taktzeiten.

Ein weiterer Sicherheitsaspekt resultiert aus den unterschiedlichen Querschnitten der Wanddurchbrechung und des Durchlasses. Auch wenn sich in der Schließstellung des Ventilgliedes in dem Auslassabschnitt des Hauptströmungskanals ein gewisser Fluiddruck aufbauen sollte, kann dieser kein Öffnen des Ventilgliedes hervorrufen, sondern verstärkt sogar noch die auf das Ventilglied einwirkende Schließkraft. Relevant ist dies unter anderem dann, wenn die Ventileinheit mit weiteren ventileinheiten verschaltet ist und der Auslassabschnitt in der Schließstellung des Ventilgliedes mit Fluid beaufschlagt wird, das über eine andere Ventileinheit zugeführt wird.

Vorteilhafte Weiterbildungen der Erfindung gehen aus den Unteransprüchen hervor.

Eine besonders hohe Dichtqualität lässt sich erzielen, wenn der Ventilsitz und die mit dem Ventilsitz kooperierende Schließfläche des Verschlusskörpers in aneinander angepaßter Weise konisch ausgebildet sind. Eine hohe Leckagesicherheit lässt sich allerdings auch schon dann erzielen, wenn nur eine dieser beiden Paarungen konisch gestaltet ist und das andere Element eine Dichtkante aufweist.

Besonders kostengünstig herstellen lässt sich eine Anordnung, bei der der Steuerschaft mit dem Verschlusskörper in einem Stück ausgebildet ist. Dieses Bauteil besteht vorzugsweise aus Metall.

Es ist zweckmäßig, den Ventilsitz als Bestandteil eines bezüglich dem Ventilgehäuse separaten, ringförmigen Ventilsitzelementes auszuführen. Dadurch ist eine optimale Bearbeitung der Schließfläche des Ventilsitzes möglich. Man hat außerdem die Möglichkeit, für den Ventilsitz ein speziell geeignetes Material zu wählen, unabhängig vom Material des Ventilgehäuses. Besonders vorteilhaft ist es hierbei, wenn das Ventilsitzelement aus einem Kunststoffmaterial besteht.

Der Durchlass kann unmittelbar von dem ringförmigen Ventilsitzelement definiert sein.

Eine besonders einfach zu realisierende Bauform sieht vor, dass das Ventilsitzelement zwischen zwei Gehäuseteilen des Ventilgehäuses eingelegt und zweckmäßigerweise allein dadurch gehalten ist. Auf diese Weise können sonstige Befestigungsmaßnahmen entfallen. Zur exakten Zentrierung gegenüber dem Verschlusskörper kann das Ventilsitzelement einen ringförmigen, axial vorstehenden Zentrierkragen aufweisen, mit dem es in eine Durchbrechung des einen Gehäuseteils in radial abgestützter Weise axial eingreift.

Vorzugsweise verfügt das eine Gehäuseteil über eine axiale Ausnehmung, in die das Ventilsitzelement eingesetzt ist und die vom anderen Gehäuseteil teilweise überdeckt wird, bei gleichzeitigem Festhalten des eingelegten Ventilsitzelementes.

Optional ist eine Federeinrichtung vorhanden, die das Ventilglied in der Schließrichtung beaufschlagt, um im drucklosen Zustand des Systems eine definierte Ausgangsstellung zu definieren. Die Federeinrichtung sitzt zweckmäßigerweise in dem der Antriebsfläche entgegengesetzten rückseitigen Teilraum der Antriebskammer.

Bei dem Antriebskolben handelt es sich vorzugsweise um ein bezüglich dem Steuerschaft separates Bauteil. Er ist auf den Steuerschaft insbesondere unmittelbar aufgeschraubt. Auf diese Weise lässt sich das Ventilglied besonders einfach montieren.

Um eine exakte Verschiebeführung für das Ventilglied zu erhalten, sitzt auf dem Steuerschaft zweckmäßigerweise eine diesen umschließende Führungshülse, die gleitverschieblich an einer die Wanddurchbrechung umgrenzenden Umfangsfläche des Ventilgehäuses anliegt. Die Führungshülse trägt zweckmäßigerweise einen mit dieser Umfangsfläche in Dichtkontakt stehenden Dichtungsring.

Bei separater Ausgestaltung von Steuerschaft und Antriebskolben wird die Führungshülse zweckmäßigerweise vom Antriebskolben auf dem Steuerschaft festgehalten. Hierbei kann sich die Führungshülse andererseits an einem Radialvorsprung des Steuerschaftes axial abstützen.

Da die Ventileinheit sehr hohe Öffnungsgeschwindigkeiten für das Ventilglied zuläßt, ist es von Vorteil, wenn eine ringförmige gummielastische Pufferscheibe vorhanden ist, die den Aufprall des Ventilgliedes auf dem Ventilgehäuse bei Erreichen der Offenstellung mildert. Eine solche Pufferscheibe sitzt zweckmäßigerweise koaxial auf dem Steuerschaft, insbesondere in dem der Antriebsfläche entgegengesetzten Teilraum der Antriebskammer.

Ist der Ventilsitz Bestandteil eines eigenständigen Ventilsitzkörpers, ist ein einfacher Austausch möglich, beispielsweise im Verschleißfall, oder wenn auf Grund der Steuerung aggressiver Medien spezielle Materialien erforderlich sind.

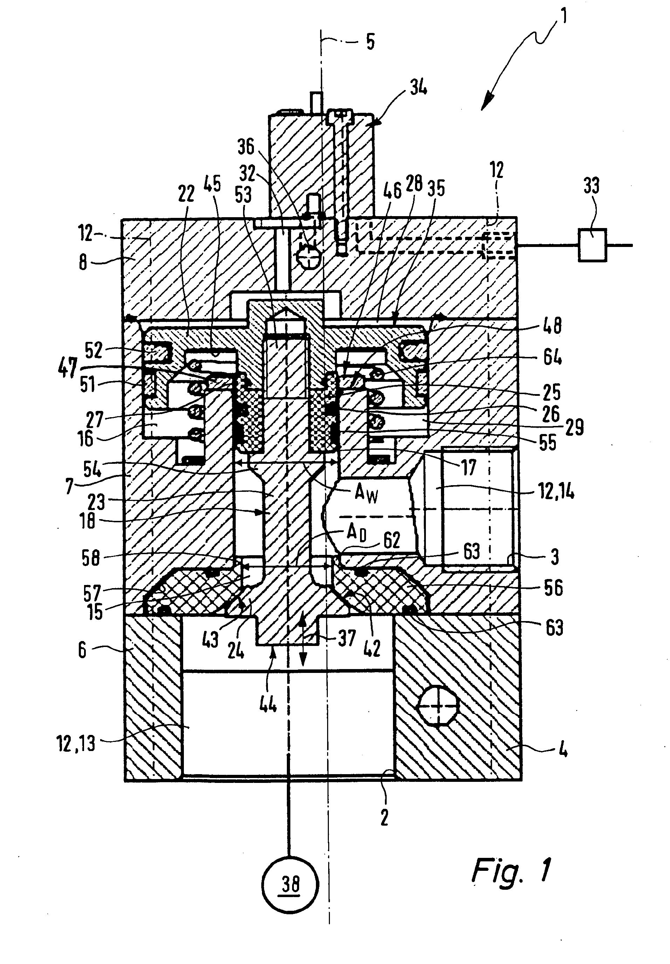

Nachfolgend wird die Erfindung anhand der beiliegenden Zeichnung näher erläutert. Die einzige Figur (Figur 1) zeigt einen Längsschnitt durch eine bevorzugte Ausführungsform der erfindungsgemäßen Ventileinheit, wobei die Schließstellung gezeigt ist.

Die in ihrer Gesamtheit mit Bezugsziffer 1 bezeichnete Ventileinheit ist universell einsetzbar, eignet sich jedoch besonders zur Steuerung des Blasdruckes bei der Blasherstellung von Kunststoffbehältern. Der Blasdruck ist hierbei der an einem Auslass abgreifbare Druck eines Arbeitsfluides, das - unter einem Arbeitsdruck stehend - über einen Einlass 2 in die Ventileinheit 1 eingespeist wird. Normalerweise entspricht der Balsdruck dem Arbeitsdruck.

Die Ventileinheit 1 kann mit Arbeitsdrücken unterschiedlicher Höhe betrieben werden. Sie eignet sich sowohl für Niederdruckanwendungen als auch für Hochdruckanwendungen. In einer bei der Blasherstellung von Kunststoffbehältern besonders geeigneten Ausgestaltung sind mehrere Ventileinheiten zu einem Ventilblock zusammengefasst, insbesondere drei Stück, wobei sie jeweils ihren eigenen Einlass besitzen und ihre Auslässe zusammengeschaltet sind. Eine Ventileinheit wird hier mit Niederdruck betrieben, zum Zwecke des sogenannten Vorblasens, eine weitere Ventileinheit wird mit Hochdruck betrieben, um den für die Endformgebung eines Kunststoffbehälters erforderlichen Blasdruck zu liefern, und eine weitere Ventileinheit dient zur Entlüftung des Auslasses. Deren Einlass bildet dann eine Entlüftungsöffnung.

Die Ventileinheit 1 umfaßt ein Ventilgehäuse 4 mit einer zweckmäßigerweise zur Längsachse parallelen Hauptachse 5. Vorzugsweise ist das Ventilgehäuse 4 mehrteilig ausgeführt und setzt sich beim Ausführungsbeispiel aus drei in Achsrichtung der Hauptachse 5 aneinandergereihten Gehäuseteilen zusammen, wobei es sich um ein Unterteil 6, ein Oberteil 8 und ein dazwischen sitzendes Zwischenteil 7 handelt. Mittels einem oder mehreren sich parallel zur Hauptachse 5 erstreckenden Zugankern 12 sind die genannten Gehäuseteile 6, 7, 8 lösbar zusammengespannt.

Es sei darauf hingewiesen, dass die Benennung der diversen Gehäuseteile keine Festlegung hinsichtlich der Orientierung im Einsatz bedeutet. Beispielsweise kann die Ventileinheit 1 auch mit nach unten weisendem Oberteil 8 betrieben werden.

Der schon erwähnte Einlass 2 befindet sich am Unterteil 6, zweckmäßigerweise an dessen Unterseite. Der Auslass 3 befindet sich an einer Seitenfläche des Zwischenteils 7. Zwischen Einlass 2 und Auslass 3 erstreckt sich ein abgewinkelter Hauptströmungskanal 12 mit einem sich an den Einlass 2 anschließenden und in Richtung der Hauptachse 5 verlaufenden Einlassabschnitt 13 und einem vom Auslass 3 ausgehenden, rechtwinkelig zu der Hauptachse 5 verlaufenden Auslassabschnitt 14. Diese beiden Abschnitte 13, 14 des Hauptströmungskanals 12 gehen über einen im Ventilgehäuse 4 angeordneten Durchlass 15 ineinander über, der in Achsrichtung der Hauptachse 5 - im Folgenden als axiale Richtung bezeichnet - orientiert ist. Zweckmäßigerweise liegt der Durchlass 15 im Übergangsbereich zwischen dem Unterteil 6 und dem Zwischenteil 7.

Mit axialem Abstand zu dem Einlassabschnitt 13 ist im Ventilgehäuse 4 eine Antriebskammer 16 ausgebildet. Zweckmäßigerweise liegt sie im Zwischenteil 7. Der Einlassabschnitt 13 geht in den zwischen dem Durchlass 15 und der Antriebskammer 16 befindlichen Bereich des Aulassabschnittes 14 über.

Die die Antriebskammer 16 begrenzende Wandung des Zwischenteils 7 weist an der dem Einlassabschnitt 13 zugewandten Seite eine bevorzugt zylindrische Wanddurchbrechung 17 auf. Diese mündet an einer dem Durchlass 15 koaxial gegenüberliegenden Stelle in den Auslassabschnitt 14 des Hauptströmungskanals 12 ein.

Im Innern des Ventilgehäuses 4 befindet sich ein linear, in der Achsrichtung der Hauptachse 5 bewegliches Ventilglied 18. Dieses umfaßt einen in der Antriebskammer 16 angeordneten Antriebskolben 22 und einen von dem Antriebskolben 22 in Richtung zu dem Durchlass 15 wegragenden, hierbei in den Hauptströmungskanal 12 hineinragenden Steuerschaft 23. Genauer gesagt durchsetzt der Steuerschaft 23 den Auslassabschnitt 14 und ragt durch den sich daran anschließenden Durchlass 15 hindurch, wobei er auf der dem Einlass 2 zugewandten Seite des Durchlasses 15, also im Einlassabschnitt 13, einen Verschlusskörper 24 trägt.

Der Steuerschaft 23 durchsetzt die Wanddurchbrechung 17 axial gleitverschieblich unter Abdichtung. Hierbei trägt er zweckmäßigerweise eine an ihm axial unbeweglich fixierte Führungshülse 25, die mit ihrem Außenumfang gleitverschieblich an der die Wanddurchbrechung 17 umgrenzenden Umfangsfläche 27 anliegt. In einer Ringnut am Außenumfang der Führungshülse 25 ist mindestens ein Dichtungsring 26 angeordnet, der mit der genannten Umfangsfläche 27 unabhängig von der Axialposition des Ventilgliedes 18 in Dichtkontakt steht und dadurch eine ständige fluiddichte Abtrennung zwischen dem Hauptströmungskanal 12 und der Antriebskammer 16 bewirkt.

Der in der Antriebskammer 16 angeordnete Antriebskolben 22 unterteilt die Antriebskammer 16 axial in einen vorderen Teilraum 28 und einen rückseitigen Teilraum 29. Der rückseitige Teilraum 29 befindet sich auf der dem Durchlass 15 zugewandten Seite. In ihn mündet die Wanddurchbrechung 17 ein.

Der in Figur 1 oben liegende vordere Teilraum 28 sei im Folgenden auch als Steuerraum bezeichnet und kommuniziert mit einem das Ventilgehäuse 4 durchsetzenden Steuerkanal 32. Bevorzugt ist der Steuerkanal 32 in dem Oberteil 28 ausgebildet.

Über den Steuerkanal 32 kann ein Antriebsfluid in den Steuerraum 28 eingespeist oder aus diesem abgeführt werden. Das Antriebsfluid steht unter einem gewissen Steuerdruck, der durch eine externe Antriebsfluidquelle 33 zur Verfügung gestellt wird.

Die dem Steuerraum 28 zugewandte Stirnfläche des Antriebskolbens 22 sei im Folgenden als Antriebsfläche 35 bezeichnet. Sie ist dem im Steuerraum 28 herrschenden Steuerdruck ausgesetzt.

Eine bevorzugt an der Oberseite an das Ventilgehäuse 4 angebaute, bei Bedarf aber auch zumindest teilweise in das Ventilgehäuse 4 integrierte Steuerventileinrichtung 34 ermöglicht eine gesteuerte Fluidbeaufschlagung des Steuerraums 28 und folglich der Antriebsfläche 35. Sie ist beispielhaft von einem elektrisch betätigbaren 3/2-Wegeventil gebildet und ist in der Lage, den Steuerraum 28 entweder mit der Antriebsfluidquelle 33 oder mit einem zur Atmosphäre führenden Entlüftungskanal 36 zu verbinden. Somit kann im Steuerraum 28 entweder der Steuerdruck oder atmosphärischer Druck eingestellt werden.

Es ist möglich, Mittel zur Druckregelung vorzusehen, die es ermöglichen, den Steuerdruck in Abhängigkeit vom jeweiligen Anwendungsfall zu variieren.

Durch die gesteuerte Fluidbeaufschlagung der Antriebsfläche 35 kann das Ventilglied 18 unter Ausführung einer linearen, axialen Umschaltbewegung 37 zwischen einer aus der Zeichnung ersichtlichen, hier nach oben verlagerten Schließstellung, und einer weiter nach unten verlagerten Offenstellung umgeschaltet werden. In der Schließstellung ist der Durchlass 15 mittels des Verschlusskörpers 24 verschlossen, sodass ein Fluidübertritt zwischen dem Einlassabschnitt 13 und dem Auslassabschnitt 14 verhindert ist. In der Offenstellung ist der Durchlass 15 freigegeben, sodass von einer externen Arbeitsdruckquelle 38 in den Einlass 2 eingespeistes Arbeitsfluid durch den Durchlass 15 hindurch zum Auslass 3 überströmen und von dort aus seiner gewünschten Verwendung zugeführt werden kann.

Das Verschließen und Freigeben des Durchlasses 15 geschieht nach dem Prinzip eines Sitzventils. Der im Einlassabschnitt 13 angeordnete Verschlusskörper 24 verfügt über eine ringförmige, axial dem Durchlass 15 zugewandte Schließfläche 42, der ein vom Durchlass 15 axial abgewandter, ringförmiger ventilsitz 43 axial gegenüber liegt. Der Ventilsitz 43 ist bezüglich dem Ventilgehäuse 4 zumindest in axialer Richtung ortsfest angeordnet. Er ist außerdem, wie aus Figur 1 ersichtlich ist, vom Antriebskolben 22 und insbesondere von dessen Antriebsfläche 35 axial abgewandt.

In der Schließstellung liegt der Verschlusskörper 24 mit seiner Schließfläche 42 dichtend am Ventilsitz 43 an. In der Offenstellung ist er vom Ventilsitz 43 axial abgehoben, sodass ein ringförmiger Überströmspalt für das Arbeitsfluid freigegeben ist.

Bevorzugt ist der den Durchlass 15 umrahmende Ventilsitz 43 wie auch die Schließfläche 42 des Verschlusskörpers 24 konisch ausgebildet. Die Kegelwinkel sind hierbei identisch, sodass sich in der Schließstellung ein dicht schließender Kontaktbereich einstellt, der der Mantelfläche eines Kegelstumpfes entspricht.

Durch die geschilderte Anordnung wird erreicht, dass das im Einlassabschnitt 13 anstehende Arbeitsfluid im Bereich des Verschlusskörper 24 ständig im Schließsinne auf das Ventilglied 18 einwirkt. Die Schließrichtung ist in gleicher Weise orientiert wie die Antriebsfläche 35 und weist in Figur 1 nach oben.

Somit nimmt das Ventilglied 18 von sich aus die Schließstellung ein, wenn im Einlassabschnitt 13 unter einem über dem Atmosphärendruck liegenden Arbeitsdruck stehendes Arbeitsfluid ansteht und der Steuerraum 28 drucklos ist. Das Umschalten in die Offenstellung erfordert zwingend eine Beaufschlagung des Steuerraumes 28 mit dem unter einem Steuerdruck stehenden Antriebsfluid.

Die in der Schließstellung dem im Einlassabschnitt 13 herrschenden Arbeitsdruck ausgesetzte, entgegen der Schließrichtung orientierte Wirkfläche 44 des Ventilgliedes 18 ist kleiner als die Antriebsfläche 35. Dadurch reicht für ein Öffnen des Durchlasses 15 ein im Vergleich zum Arbeitsdruck wesentlich geringerer Steuerdruck aus. Von besonderem Vorteil ist es aber, dass die zum Öffnen erforderliche Umschaltzeit durch praktisch beliebiges Erhöhen des Steuerdruckes sehr kurz gehalten werden kann.

Während die Schließstellung durch den Kontakt zwischen Schließfläche 42 und Ventilsitz 43 definiert wird, ist die Offenstellung dadurch vorgegeben, dass der Antriebskolben 22 mit seiner dem rückseitigen Teilraum 29 zugewandten Rückfläche 45 auf eine Anschlagfläche 46 aufläuft. Speziell in Verbindung mit hohen Umschaltgeschwindigkeiten ist es hierbei von Vorteil, wenn die Anschlagfläche 46 an einer ringförmigen gummielastischen Pufferscheibe 47 ausgebildet ist, die in einer den Steuerschaft 23 koaxial umschließenden Weise in dem rückseitigen Teilraum 29 angeordnet ist, und zwar axial zwischen der Rückfläche 45 und dem die Wanddurchbrechung 47 umschließenden Wandabschnitt 48 des Zwischenteils 7.

Die Pufferscheibe 47 kann entweder nur lose eingelegt sein oder ist entweder am Antriebskolben 22 oder am Ventilgehäuse 4 fixiert, insbesondere durch Verkleben oder durch eine sonstige stoffschlüssige Verbindung.

Prinzipiell lässt sich die Ventileinheit 1 auch ohne Pufferscheibe 47 betreiben. In diesem Fall fungiert der Wandabschnitt 48 unmittelbar selbst als Anschlagfläche 46 zur Vorgabe der Offenstellung.

Der Antriebskolben 22 besteht zweckmäßigerweise aus Metall. Zur dichten Abtrennung der beiden Teilräume 28, 29 trägt er an seinem Außenumfang in einer Ringnut einen Dichtungsring 52. Außerdem ist er am Außenumfang mit einem einen reibungsarmen Gleitvorgang gewährleistenden Führungsring 51 ausgestattet.

Vorzugsweise ist der Antriebskolben 22 ein bezüglich dem Steuerschaft 23 separates Bauteil. Exemplarisch ist er auf einen endseitigen Außengewindeabschnitt 53 des Steuerschaftes 23 aufgeschraubt. Hierbei dient er gleichzeitig zur axialen Fixierung der koaxial auf den Steuerschaft 23 aufgesteckten Führungshülse 25. Er stützt die Führungshülse 25 axial einerseits ab, die sich axial andererseits an einem Radialvorsprung 54 des Steuerschaftes 23 abstützt.

Auch die Führungshülse 25 besteht vorzugsweise aus Metall und trägt dann zur Verringerung der Gleitreibung am Außenumfang einen Führungsring 55.

Der Verschlusskörper 24 ist vorzugsweise einstückig mit dem Steuerschaft 23 ausgebildet. Er steht insbesondere nach Art eine ringförmigen Radialvorsprunges radial über den Steuerschaft 23 vor. Steuerschaft 23 und Verschlusskörper 24 bestehen insbesondere aus Metall.

Prinzipiell kann der Ventilsitz 43 unmittelbar am Ventilgehäuse 4 ausgebildet sein. Besonders vorteilhaft ist allerdings die beim Ausführungsbeispiel realisierte Bauform, bei der er an einem bezüglich dem Ventilgehäuse 4 separaten ringförmigen Ventilsitzelement 56 ausgebildet ist. Auf diese Weise kann für den Ventilsitz 43 sehr einfach ein optimal an die Dichtungsanforderungen angepaßtes Material gewählt werden. Das Ventilsitzelement 56 einschließlich des Ventilsitzes 43 besteht insbesondere aus Kunststoffmaterial.

Beim Ausführungsbeispiel ist in die dem Unterteil 6 zugewandte Stirnfläche des Zwischenteils 7 eine axiale Ausnehmung 57 eingebracht, in die das ringförmige Ventilsitzelement 56 eingesetzt ist. Das Ventilsitzelement 56 umschließt hierbei das Ventilglied 18 in koaxialer Weise.

Festgehalten wird das Ventilsitzelement 56 durch das Unterteil 6, das die Ausnehmung 57 teilweise überdeckt und dabei das Ventilsitzelement 56 axial abstützt.

Somit ist eine sehr einfache Montage des Ventilsitzelementes 56 möglich. Es braucht lediglich beim Zusammenbau des Ventilgehäuses 4 in die Ausnehmung 57 eingelegt werden, bevor das Unterteil 6 und das Zwischenteil 7 aneinandergesetztwerden.

Das Ventilglied 18 ist über die Führungshülse 25 relativ zu dem Zwischenteil 7 geführt und ausgerichtet. Es ist daher von Vorteil, wenn auch der Ventilsitz 43 bezüglich dem Zwischenteil 7 derart zentriert ist, dass eine exakte Koaxiallage zu dem Verschlusskörper 24 gegeben ist. Beim Ausführungsbeispiel wird dies dadurch erreicht, dass das Ventilsitzelement 56 an seiner dem Auslassabschnitt 14 zugewandten Stirnseite einen axial vorstehenden Zentrierkragen 58 aufweist, der zentrierend in eine in den Auslassabschnitt 14 übergehende Durchbrechung 62 des Zwischenteils 7 axial eingreift und daran radial abgestützt ist.

Aus dieser Anordnung ergibt sich, dass der Durchlass 15 zumindest teilweise und vorzugsweise zur Gänze von dem Ventilsitzelement 56 gebildet wird.

Mit Ausnahme des Eingriffsbereiches zwischen dem Zentrierkragen 58 und der Durchbrechung 62 ist das Ventilsitzelement 56 zweckmäßigerweise mit geringfügigem radialem Spiel in der Ausnehmung 57 aufgenommen, sodass seine Lage exakt durch den Zentrierkragen 58 vorgegeben werden kann.

Das Ventilsitzelement 56 ist zweckmäßigerweise mit einer oder mehreren zu dem Ventilglied 18 konzentrischen Dichtungsringen 63 versehen, die mit dem Unterteil 6 und dem Zwischenteil 7 in Dichtkontakt stehen um einen unerwünschten Fluidübertritt auszuschließen.

Eine vor allem in sicherheitsrelevanter Hinsicht vorteilhafte Maßnahme besteht bei der Ventileinheit 1 darin, dass der Querschnitt A_{D} des Durchlasses 15 kleiner ist als der Querschnitt A_{W} der Wanddurchbrechung 17. Der hieraus resultierende Querschnittsunterschied bewirkt, dass das in der Schließstellung des Ventilgliedes 18 im Auslassabschnitt 14 anstehende Arbeitsfluid eine resultierende Kraft auf das Ventilglied 18 ausübt, bei der es sich um eine in Schließrichtung wirksame Schließkraft handelt.

Auf diese Weise ist eine sichere Beibehaltung der Schließstellung auch dann gewährleistet, wenn in einer Betriebsphase der im Einlassabschnitt 13 herrschende Fluiddruck geringer sein sollte als der im Auslassabschnitt herrschende Fluiddruck.

Es ist zweckmäßig, Maßnahmen zu treffen, die bewirken, dass das Ventilglied 18 im komplett drucklosen Zustand die Schließstellung als Grundstellung einnimmt. Erreicht wird dies zweckmäßigerweise durch eine sich zwischen dem Ventilgehäuse 4 und dem Ventilglied 18 abstützende Federeinrichtung 64, die auf das Ventilglied 18 eine in Schließrichtung wirksame Federkraft ausübt.

Vorzugsweise befindet sich die Federeinrichtung 64 in dem rückseitigen Teilraum 29, wobei sie das Ventilglied 18 koaxial umschließt. Sie stützt sich einerseits an der Rückfläche 45 des Antriebskolbens 22 ab und andererseits an dem die Wanddurchbrechung 17 umgrenzenden Wandabschnitt 48 des Zwischenteils 7.

Da das Ventilglied 18 im Betrieb durch den im Einlassabschnitt herrschenden Arbeitsdruck in der Schließstellung gehalten wird, genügt eine relativ schwache Federeinrichtung 64. Dies hat den Vorteil, dass die vom Steuerdruck zu überwindende Federkraft sehr gering ist.

Die schließende Wirkung des Arbeitsdruckes hat auch den Vorteil, dass die Schließkraft mit zunehmendem Arbeitsdruck ebenfalls automatisch ansteigt, ohne dass irgendwelche zusätzlichen Maßnahmen zu treffen wären. Auf diese Weise ist auch bei Hochdruckanwendungen eine zuverlässige Absperrung des Durchlasses 15 gewährleistet.

## Patentansprüche

1. Ventileinheit, insbesondere zur Steuerung des Blasdruckes bei der Blasherstellung von Kunststoffbehältern, mit einem in einem Ventilgehäuse (4) zwischen einer Offenstellung und einer Schließstellung linear verschiebbar angeordneten Ventilglied (18), das einen in einer Antriebskammer (16) angeordneten, einen zur Vorgabe der gewünschten Schaltstellung gesteuert mittels eines Antriebsfluides beaufschlagbare Antriebsfläche (35) aufweisenden Antriebskolben (22) enthält, von dem ein eine Wanddurchbrechung (17) der die Antriebskammer (16) begrenzenden Wand unter Abdichtung durchsetzender Steuerschaft (23) wegragt, der in einen einen Einlass (2) mit einem Auslass (3) verbindenden Hauptströmungskanal (12) hineinragt und dort einen Verschlusskörper (24) trägt, der mit einem axial orientierten, gehäusefesten Ventilsitz (43) kooperiert, der einen zwischen dem Einlass (2) und dem Auslass (3) platzierten, bezüglich der Wanddurchbrechung (17) koaxialen Durchlass (15) des Hauptströmungskanals (12) umrahmt, **dadurch gekennzeichnet, dass** der Steuerschaft (23) durch den Durchlass (15) hindurchragt und den Verschlusskörper (24) auf der dem Einlass (2) zugewandten Seite des Durchlasses (15) trägt, wobei der Ventilsitz (43) vom Antriebskolben (22) und dessen Antriebsfläche (35) axial abgewandt ist, derart, dass das in dem zwischen dem Einlass (2) und dem Durchlass (15) angeordneten Einlassabschnitt (13) des Hauptströmungskanals (12) anstehende Fluid ständig in Schließrichtung auf das Ventilglied (18) einwirkt und durch das Antriebsfluid eine entgegengesetzte Öffnungskraft ausübbar ist, und dass der Querschnitt des Durchlasses (15) geringer ist als derjenige der Wanddurchbrechung (17), derart, dass das in der Schließstellung in dem zwischen dem Durchlass (15) und dem Auslass (3) angeordneten Auslassabschnitt (14) des Hauptströmungskanals (12) anstehende Fluid eine resultierende Schließkraft auf das Ventilglied (18) ausübt.

2. Ventileinheit nach Anspruch 1, **dadurch gekennzeichnet, dass** der Ventilsitz (43) und/oder die mit dem Ventilsitz (43) kooperierende Schließfläche (42) des Verschlusskörpers (24) konisch ausgebildet ist/sind.

3. Ventileinheit nach Anspruch 1 oder 2, **dadurch gekennzeichnet, dass** der Steuerschaft (23) und der Verschlusskörper (24) einstückig miteinander ausgebildet sind.

4. Ventileinheit nach einem der Ansprüche 1 bis 3, **dadurch gekennzeichnet, dass** der Ventilsitz (43) an einem bezüglich dem Ventilgehäuse (4) separaten, ringförmigen Ventilsitzelement (56) ausgebildet ist.

5. Ventileinheit nach Anspruch 4, **dadurch gekennzeichnet, dass** Ventilsitzelement (56) aus Kunststoffmaterial besteht.

6. Ventileinheit nach Anspruch 4 oder 5, **dadurch gekennzeichnet, dass** der Durchlass (15) zumindest teilweise von dem ringförmigen Ventilsitzelement (56) gebildet ist.

7. Ventileinheit nach einem der Ansprüche 4 bis 6, **dadurch gekennzeichnet, dass** das Ventilsitzelement (56) zwischen zwei Gehäuseteile (6,7) des Ventilgehäuses (4) eingelegt ist.

8. Ventileinheit nach Anspruch 7, **dadurch gekennzeichnet, dass** das eine Gehäuseteil (6) den Einlass (2) und das andere Gehäuseteil (7) den Auslass (3) aufweist.

9. Ventileinheit nach Anspruch 7 oder 8, **dadurch gekennzeichnet, dass** das Ventilsitzelement (56) einen ringförmigen, axial vorstehenden Zentrierkragen (58) aufweist, mit dem es in eine Durchbrechung (62) des einen Gehäuseteils (7) in zentrierender Weise axial eingreift.

10. Ventileinheit nach einem der Ansprüche 7 bis 9, **dadurch gekennzeichnet, dass** das Ventilsitzelement (56) in einer axialen Ausnehmung (57) des einen Gehäuseteils (7) aufgenommen ist, die vom anderen Gehäuseteil (6) unter gleichzeitiger Abstützung des Ventilsitzelementes (56) teilweise abgedeckt wird.

11. Ventileinheit nach einem der Ansprüche 1 bis 10, **dadurch gekennzeichnet, dass** eine das Ventilglied (18) in Schließrichtung beaufschlagende Federeinrichtung (64) vorhanden ist.

12. Ventileinheit nach Anspruch 11, **dadurch gekennzeichnet, dass** die Federeinrichtung (64) in dem der Antriebsfläche (35) entgegengesetzten rückseitigen Teilraum (29) der Antriebskammer (16) angeordnet ist.

13. Ventileinheit nach einem der Ansprüche 1 bis 12, **dadurch gekennzeichnet, dass** der Antriebskolben (22) ein bezüglich dem Steuerschaft (23) separates Bauteil ist.

14. Ventileinheit nach Anspruch (13), **dadurch gekennzeichnet, dass** der Antriebskolben (22) auf den Steuerschaft (23) aufgeschraubt ist.

15. Ventileinheit nach einem der Ansprüche 1 bis 14, **dadurch gekennzeichnet, dass** auf dem Steuerschaft (23) koaxial eine Führungshülse (25) axial fest angeordnet ist, die gleitverschieblich an der die Wanddurchbrechung (17) umgrenzenden Umfangsfläche (27) anliegt.

16. Ventileinheit nach Anspruch 15, **dadurch gekennzeichnet, dass** die Führungshülse (25) einen mit der Umfangsfläche (27) der Wanddurchbrechung (17) in Dichtkontakt stehenden Dichtungsring (26) trägt.

17. Ventileinheit nach Anspruch 15 oder 16, **dadurch gekennzeichnet, dass** die Führungshülse (25) auf den Steuerschaft (23) koaxial aufgesteckt ist, wobei sie sich axial einerseits an einem Radialvorsprung (54) des Steuerschaftes (23) abstützt und axial andererseits an dem als separates Bauteil ausgebildeten, am Steuerschaft (23) befestigten Antriebskolben (22).

18. Ventileinheit nach einem Ansprüche 1 bis 17, **dadurch gekennzeichnet, dass** die Antriebsfläche (35) des Antriebskolbens (22) größer ist als die in der Schließstellung von dem im Einlassabschnitt (13) herrschenden Arbeitsdruck beaufschlagte Wirkfläche (44) des Ventilgliedes (18).

19. Ventileinheit nach einem der Ansprüche 1 bis 18, **dadurch gekennzeichnet, dass** in dem der Antriebsfläche (35) entgegengesetzten Teilraum (29) der Antriebskammer (16) eine den Steuerschaft koaxial umschließende ringförmige, gummielastische Pufferscheibe (47) angeordnet ist, die sich axial an einem die Wanddurchbrechung (17) umschließenden Wandabschnitt des Ventilgehäuses (4) axial abstützen kann.
